(19) Europäisches Patentamt
European Patent Office
Office européen des brevets

(11) **EP 1 453 713 B1**

(12) **EUROPÄISCHE PATENTSCHRIFT**

(45) Veröffentlichungstag und Bekanntmachung des Hinweises auf die Patenterteilung:
**07.05.2014 Patentblatt 2014/19**

(21) Anmeldenummer: **02772352.7**

(22) Anmeldetag: **30.09.2002**

(51) Int Cl.:
***B60T 13/66*** *(2006.01)*     ***B60T 8/40*** *(2006.01)*

(86) Internationale Anmeldenummer:
**PCT/EP2002/010926**

(87) Internationale Veröffentlichungsnummer:
**WO 2003/039932 (15.05.2003 Gazette 2003/20)**

(54) **VERFAHREN ZUR UNTERSTÜTZUNG EINES BREMSENSYSTEMS BEI VERMINDERTER WIRKSAMKEIT DER FAHRZEUGBREMSANLAGE**

METHOD FOR SUPPORTING A BRAKE SYSTEM DURING REDUCED EFFECTIVENESS OF THE BRAKE SYSTEM OF A VEHICLE

PROCEDE PERMETTANT DE SOUTENIR UN SYSTEME DE FREINAGE EN CAS D'EFFICACITE REDUITE DU SYSTEME DE FREINAGE DU VEHICULE

(84) Benannte Vertragsstaaten:
**DE FR IT**

(30) Priorität: **08.11.2001 DE 10154466**
**15.11.2001 DE 10156005**
**16.08.2002 DE 10238427**

(43) Veröffentlichungstag der Anmeldung:
**08.09.2004 Patentblatt 2004/37**

(73) Patentinhaber: **Continental Teves AG & Co. oHG**
**60488 Frankfurt (DE)**

(72) Erfinder:
• **BATISTIC, Ivica**
**60385 Frankfurt/Main (DE)**
• **MAHLO, Rüdiger**
**61462 Königstein (DE)**
• **CORNILS, Arne**
**60389 Frankfurt/Main (DE)**

(56) Entgegenhaltungen:
DE-A- 10 137 273      DE-A- 19 511 844
DE-A- 19 632 130      DE-A- 19 812 554
DE-A1- 19 501 760

**EP 1 453 713 B1**

**Beschreibung**

Die vorliegende Erfindung bezieht sich auf ein Verfahren zur aktiven Bremsdruck- oder Bremskraftunterstützung eines Bremsensystems bei verminderter Wirksamkeit der Fahrzeugbremsanlage.

Aus der Forderung nach Funktionserweiterungen im Rahmen der technischen Möglichkeiten elektronischer Bremsensysteme entstand die Idee, eine hydraulische Unterstützung der Bremse bei eingeschränkter Wirksamkeit der Bremsen durch hohe thermische Belastung (Fading), Salzlösungseinfluss oder starken Verschleiß zu ermöglichen.

Die DE 195 01 760 A1 offenbart ein Verfahren und eine Vorrichtung zur Steuerung eines ABS/ASR-Systems, das eine Rückförderpumpe sowie wenigstens ein Ansaugventil und wenigstens ein Umschaltventil umfasst. Die Ansteuerung der Rückförderpumpe und/oder des Umschaltventils und/oder des Ansaugventils erfolgt abhängig von einem Signal, das die Betätigung des Bremspedals repräsentiert. Anhand des erfassten Drucks im Hauptbremszylinder und verschiedener Plausibilitätsabfragen wird der als Fading bezeichnete Betriebszustand erkannt, woraufhin der Druck im Radbremszylinder erhöht wird.

Als Haupteinsatzbereich einer solchen Unterstützung kann ein vollgebremstes Fahrzeug angesehen werden, dessen Bremsanlage selbst bei hohem Fahrervordruck nicht mehr in der Lage ist, den Bremsdruck bis zum Erreichen des Blockierdruckniveaus und Auslösen einer Blockierschutzregelung zu erhöhen.

Diese als OVERBOOST bezeichnete Funktion wird jedoch, um die hydraulisch belasteten Bauteile der Bremsanlage (THZ, Bremssättel, HCU) zu schützen, durch verschiedene Systemschutzgrenzen eingeschränkt, die eine Erkennung einer solchen Situation und die Auslösung der Unterstützung als Funktion des Fahrervordrucks nur in einem engen Toleranzband zulassen. Auch wird aus Komfortgründen die Auslösung einer Overboost-Funktion auf kritische Situationen beschränkt.

Unter Berücksichtigung dieser Voraussetzungen, war es eine Aufgabe der vorliegenden Erfindung, ein Verfahren zu entwickeln, das den Nutzfall oder Bedarfsfall für eine hydraulische Unterstützung des Bremsensystems rechtzeitig plausibel erkennt und zum geeigneten Zeitpunkt eine hydraulische Unterstützung des Bremsgeschehens auslöst.

Es hat sich herausgestellt, dass diese Aufgabe durch ein Verfahren gemäß Anspruch 1 gelöst werden kann.

Die aktive Unterstützung des Bremsvorgangs wird also durch die sogenannte Overboost-Funktion herbeigeführt, die eine Erhöhung des Bremsdruckes oder der Bremskraft durch Zuschaltung einer Energie- oder Druckquelle bewirkt, und die Auslösung der Overboost-Funktion wird auf Situationen beschränkt, in denen vorgegebene Kriterien erfüllt sind.

In den folgenden Abschnitten ist der Algorithmus zur Erkennung einer Overboost-Situation als ein wesentlicher Gegenstand der Erfindung ausführlich beschrieben. Durch das erfindungsgemäße Verfahren wird sichergestellt, dass die hydraulische Unterstützung so häufig wie nötig, jedoch so selten wie möglich erfolgt.

Gemäß der Erfindung bestimmen die vorgegebenen Kriterien eine Overboost-Eintrittsschwelle, bei deren Überschreitung die aktive Unterstützung eingeleitet wird. Hierbei werden als Kriterien zur Bestimmung der Overboost-Eintrittsschwelle die Änderung der Fahrzeuggeschwindigkeit oder einer Fahrzeugreferenzgeschwindigkeit, die Zeitspanne seit Beginn der Bremsenbetätigung, eine die Tendenz der Fahrzeugverzögerung wiedergebende Messgröße und ein die Reaktion des Fahrzeugs auf die Radverzögerung wiedergebender Wert - ausschließlich oder unter Berücksichtigung weiterer Kriterien - herangezogen.

Die Tendenz der Fahrzeugverzögerung lässt sich z.B. durch Beobachtung der Fahrzeugverzögerung im Vergleich zur Verzögerung einzelner Räder bewerten.

Weitere wichtige Informationen zur Bewertung der Reaktion des Fahrzeugs auf die Bremsenbetätigung liefert das Einsetzen einer EBV-Regelung und/oder eines ABS-Regelungsvorgangs.

Die Overboost-Eintrittsschwelle wird in Abhängigkeit zumindest

- von der Fahrzeugverzögerung oder einem Näherungswert,
- von dem Zeitablauf seit Beginn der Bremsenbetätigung,
- von der Radverzögerung,
- von der Differenz zwischen der Radverzögerung und der Fahrzeugverzögerung,
- von dem Eingreifen einer EBV-Regelung und
- von dem Eingreifen einer Blockierschutzregelung variiert.

Nach einem speziellen Beispiel für diese Abhängigkeit werden die Overboost-Eintrittsschwelle(*OVERBOOST_act_th*) und das Überschreiten dieser Schwelle nach der Beziehung

$$OVERBOOST\_act\_th = \begin{cases} TOTACC\_th + \\ Hard\_Apply\_Offset + \\ VACC\_grd\_Offset + \\ VACC\_Diff\_Offset + \\ RA\_EBD\_Offset + \\ RA\_ABS\_Offset \end{cases}$$

ermittelt, wobei "*TOTACC_th*" eine Basisschwelle und die Offset-Komponente "*Hard_Apply_Offset*" die Zeitspanne seit der

Bremsenbetätigung wiedergeben, wobei die Offset-Komponenten "*VACC_grd_Offset*" die Radverzögerung und "*VACC_Diff_offset*" die Differenz zwischen der Rad- und der Fahrzeugverzögerung bedeuten und wobei die Offset-Komponenten "*RA_EBD_Offset*" sowie "*RA_ABS_Offset*" den Eingriff der EBV-Regelung und der ABS-Regelung in die Bestimmung der OVERBOOST-Eintrittsschwelle einbeziehen.

Weitere Einzelheiten der Erfindung werden im folgenden an Hand der beigefügten Abbildungen erläutert.

Es zeigen für spezielle Ausführungsbeispiele des erfindungsgemäßen Verfahrens in Diagrammen

Fig. 1    die Abhängigkeit des Vordrucks von der Fahrzeugverzögerung und den Verlauf einer Overboost-Basisschwelle,

Fig. 2    den Verlauf eines Offset-Wertes in Abhängigkeit von der Zeitspanne seit Beginn der Bremsenbetätigung,

Fig. 3    die Bildung und Herleitung einiger von Fahrzeugverzögerung abhängigen Kennwertes zur Berechnung der Verzögerungstendenz,

Fig. 4    die Bildung eines Differenz-Kennwertes,

Fig. 5    die Bildung einer Overboost-Eintrittsschwelle,

Fig. 6A    in Form eines Flow-Charts einzelne Schritte im Ablauf eines Beispiels des erfindungsgemäßen Verfahrens und

Fig. 6B    in gleicher Darstellung wie Fig. 6A einige weitere Schritte.

Der Erfindung liegen folgende Überlegungen zugrunde:

Der Erkennungsalgorithmus beruht auf einer Bewertung der Fahrzeug-Ist-Verzögerung im Vergleich zu dem Verzögerungswunsch des Fahrers bzw. zu der Soll-Verzögerung.

So wird z.B. der Fahrer beim Erkennen einer kritischen Soll/Ist-Verzögerungsabweichung (mit Soll > Ist) durch eine Hilfskraft unterstützt, die ein Motorpumpenaggregat liefert, mit dem der hydraulische Druck im Bremsensystem erhöht werden kann. Bekannte und gebräuchliche Kraftfahrzeug-Regelungssysteme, wie ABS, ASR, ESP etc., verfügen ohnehin über solche Motorpumpenaggregate, die zur Realisierung der gewünschten Unterstützung herangezogen werden können.

Die Bewertung der jeweiligen Situation stützt sich dabei auf Erkenntnisse und Erfahrungen, die bei der Entwicklung von Blockierschutzregelungssystemen (ABS) gewonnen wurden. Auch wird ausgenutzt, dass sich Bremsdruck und FahrzeugVerzögerung analog verhalten.

Die Fahrzeugverzögerung kann im ungeregelten Fall als proportionale Funktion zum Fahrervordruck angenommen werden. Die Proportionalität geht allerdings verloren, sobald Regelaktivitäten infolge von Eingriffen eines Systems zur elektronischen Regelung der Bremskraftverteilung (EBV) oder Blockierschutzregelung (ABS) einsetzen. Dies ist zum einen auf die Art der ABS- oder EBV-Verzögerungssignalbildung, zum anderen auf den Verlust der homogenen Bremskraftverteilung am Fahrzeug zurückzuführen und muss durch entsprechende Maßnahmen kompensiert werden.

Nach Analyse der Zusammenhänge kristallisierte sich bei einem Ausführungsbeispiel der Erfindung als Ergebnis eine "Press_Main- Overboost"- Auslöseschwelle ("Press_Main" bezeichnet den Vordruck oder Hauptzylinderdruck) basierend auf der Fahrzeugverzögerung heraus. Die Verzögerungstendenzen, die Regelaktivitäten des Bremssystems sowie eine eventuell nicht plausible Verzögerungssignalbildung wurden durch eine Addition dieser Schwelle mit entsprechenden Offset-Komponenten berücksichtigt.

Überschreitet der Fahrervordruck diese Schwellen, wird erfindungsgemäß eine Overboost-Reaktion ausgelöst.

Folgende allgemeine Randbedingungen sind zu beachten: Ausgehend von den Bauteilfestigkeiten der Bremsanlage werden bestimmte Systemdruckgrenzen definiert, innerhalb derer die Overboost-Funktion aktiv werden darf. Als besonders kritische Bauteile werden dabei - je nach Anlage - die Bremssättel, der hydraulische Regler (HCU) und bestimmte Ventile, wie das bekannte EUV-Ventil (mit "EUV" wird ein elektrisches Umschaltventil bezeichnet, über das bei bekannten Systemen in bestimmten Situationben Druckmittel aus dem Hauptzylinder in das Bremsensystem geleitet wird) angesehen. Es gelten die nachfolgenden Schutzbedingungen:

a) Bremssattelschutz:

Modell_Wheel_Pressure(Radbremsdruck)< 200 bar

b) Systemschutz (EUV):

Press_Main (Vordruck) < 140 bar

Werden diese Grenzen überschritten, erfolgt eine Deaktivierung des Overboost-Funktion.

Basisschwelle:

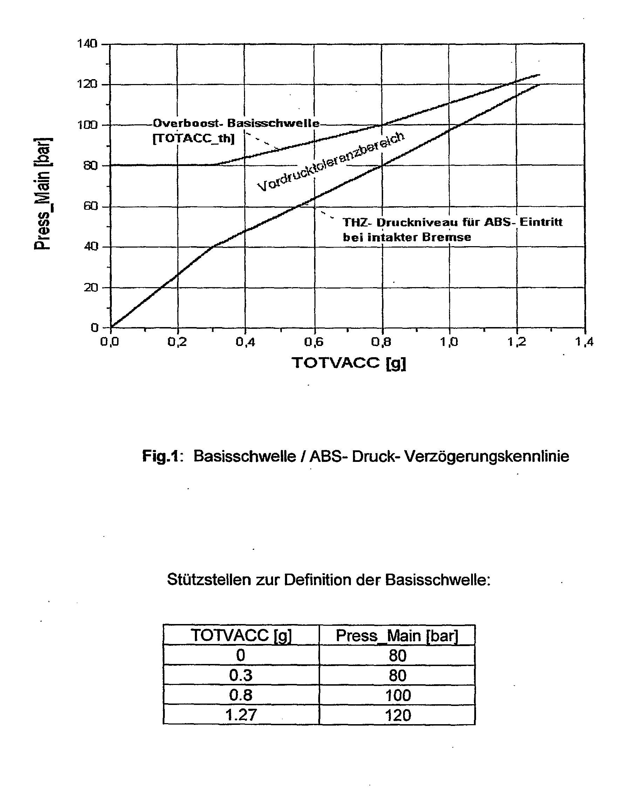

Die Press_Main-Overboost-Basisschwelle (siehe Fig. 1) wird proportional als Funktion eines ABS-Signals (TOTACC) gebildet. Dieses Signal wird auf Basis der Fahrzeugreferenzgeschwindigkeit berechnet und repräsentiert die aktuelle, absolute Fahrzeugverzögerung bezogen auf einen Startwert zu Beginn der Bremsung. Die ermittelte Proportionalität wird mit Hilfe eines Polygons dargestellt und bildet die untere Grenze eines ABS-relevanten Druckbereichs (Fig. 1). Der Wertebereich ist dabei auf einen Minimal-Wert von 80 bar limitiert und befindet sich mit einer Sicherheitstoleranz oberhalb der Druck-Verzögerungskennlinie einer intakten Bremse (untere Kennlinie in Fig. 1). Der Fahrer muss, unabhängig von der sich einstellenden Verzögerung, einen ABS-relevanten, über dem gewohnten Druckniveau befindlichen Vordruck erzeugen und er sollte sich damit über die reduzierte Wirksamkeit seiner Bremse bewusst werden.

Die Zusammenhänge werden durch die Fig. 1, in der die Basisschwelle über einer ABS-Druck-Verzögerungskennlinie wiedergegeben ist, veranschaulicht. Die im Diagramm in Fig. 1 dargestellte Overboost-Basisschwelle (TOTACC_th) ist durch die ebenfalls in Fig. 1 aufgelisteten Stützstellen definiert.

Offsets:

Die Basisschwelle ist auf Grund ihrer Abhängigkeit vom TOTACC sehr träge und dadurch sowohl gegenüber zügigen Erhöhungen des Fahrervordruckes als auch gegenüber abrupt verzögerungsändernden Fahrzeugzuständen zu unempfindlich.

Um eventuelle Overboost-Fehlauslösungen zu vermeiden, werden diese Zustände erkannt und es wird die Basisschwelle mit entsprechenden Offsets beaufschlagt.

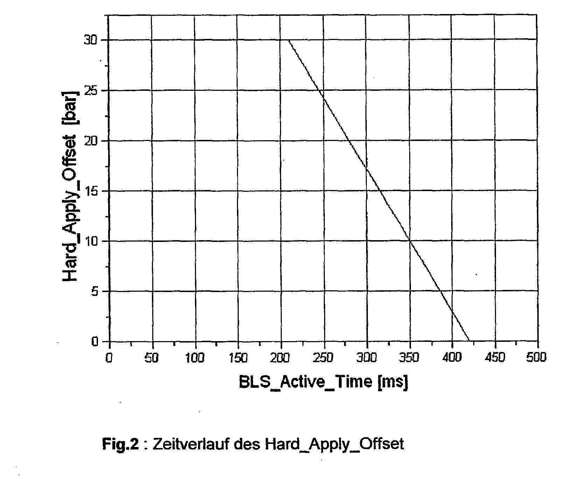

Hard_Apply_Offset (Fig. 2):

Im Falle einer schnellen Vordrucksteigerung auf Hochreibwert ist es möglich, dass zu Beginn eines Bremsvorgangs die Overboost-Basisschwelle überschritten wird, da das nacheilende Verzögerungssignal die eigentliche Fahrzeugverzögerung noch nicht richtig abbildet.

Die Basisschwelle wird daher in der Anfangsphase, hier in den ersten 30 loops (1 loop entspricht 7 msec) des Bremsvorgangs (nach der Reaktion des Bremslichschalters bzw. nach dem BLS-Signal-Wechsel) um ein sogenanntes

$Hard\_Apply\_Offset=30bar$

erhöht, wie dies in Fig. 2 dargestellt ist. Anschließend (nach 30 loops = 210 msec) wird das Offset um 1 bar pro loop reduziert, um einen weichen Übergang mit der Basisschwelle zu ermöglichen. Fig. 2 zeigt den Zeitverlauf dieses sogenannten "Hard_Apply_Offset".

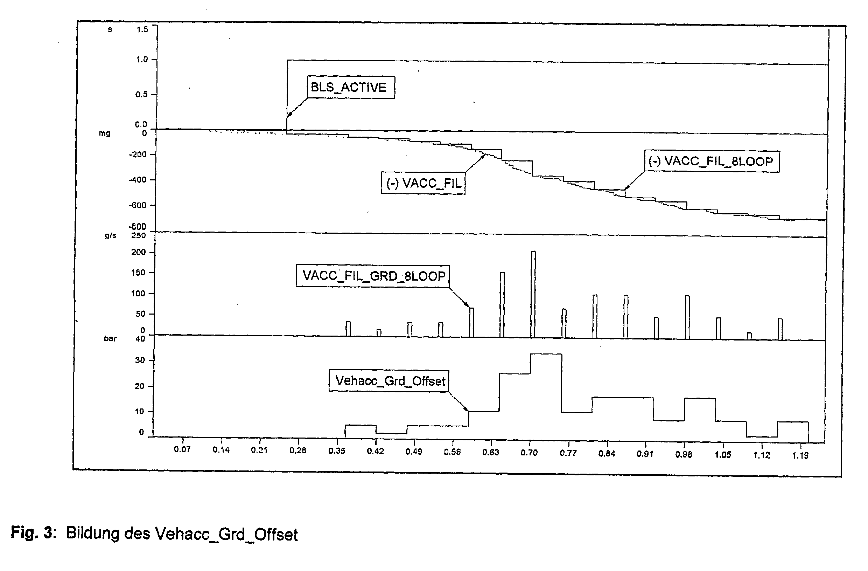

Vehacc_Gradient_Offset (Fig. 3):

Im ABS-Modus existiert neben dem aus der Fahrzeugreferenzgeschwindigkeit abgeleiteten Signal "TOTACC" ein weiteres Verzögerungssignal, welches aus den gefilterten Radverzögerungen (ACCF) gebildet wird. Auf Basis dieses als $VACC_{fil}$ bezeichneten Signals kann auf das Verzögerungspotential des Fahrzeuges geschlossen werden, da die Räder schneller als das Fahrzeug auf Vordruckänderungen im Bremssystem reagieren, sofern die Bremse intakt ist. Erfolgt z.B. eine Vordruckerhöhung bei hoher Verzögerung außerhalb eines ABS-Vorgangs und ist in dieser Situation an den Rädern keine Reaktion erkennbar, so ist eine Overboost-Unterstützung durchaus sinnvoll, um das Verzögerungspotential der Bremse zu erhöhen und einen ABS-Regelungsvorgang auszulösen.

Der Gradient der $VACC_{fil}$ gilt als Indikator für die zu erwartende Verzögerungstendenz. Dazu wird die Änderung der $VACC_{fil}$ nach jeweils 8 loop (ab BLS_ACTIVE, siehe Fig. 3) betrachtet und das Vehacc_Gradient_Offset nach folgender Beziehung berechnet:

$$Vehacc\_Grd\_Offset = INT\left[\frac{VACC^{\mathsf{I}}_{fil,(8loop)}}{6}\right]\;[bar]\quad\text{mit}\;\;VACC^{\mathsf{I}}_{fil,(8loop)}\;>\;0$$

Das Vehacc_Grd_Offset wird nur berechnet, wenn eine Verzögerungszunahme erkannt wird.

In Fig. 3 ist die schrittweise Herleitung des Vehacc_Grd_Off-sets dargestellt.

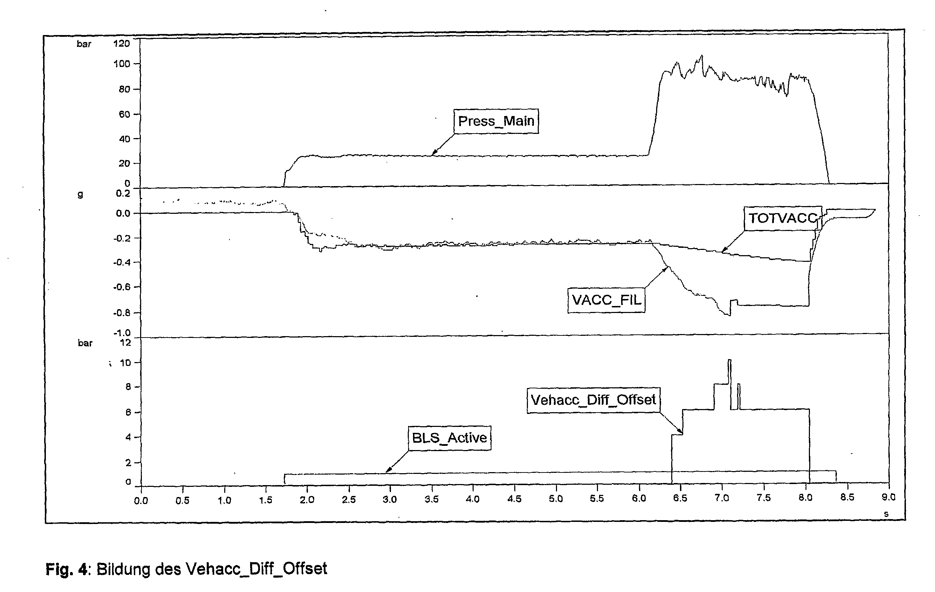

Vehacc_Diff_Offset (Fig. 4):

Bedingt durch die unterschiedliche Art der Signalbildung, können während einer Bremsung die Verzögerungssignale $VACC_{fil}$ und TOTACC voneinander abweichen. Im allgemeinen sind die Abweichungen, besonders im eingeschwungenen Zustand, relativ gering. Inder Regel eilt die TOTVACC der $VACC_{fil}$ nach. Stellen sich im eingeschwungenen Zustand höhere Abweichungen ein, kann davon ausgegangen werden, dass das TOTACC-Signal nicht die tatsächliche Fahrzeugverzögerung abbildet.

In diesem Fall wird die Basisschwelle mit dem Signal "Vehacc_Diff_Offset" beaufschlagt:

$$Vehacc\_Diff\_Offset = INT\left[10*\left(VACC_{fil}[g] - TOTACC[g]\right)\right]\quad[bar]$$

$$\text{wenn } (VACC_{fil} - TOTACC) > 0.2g$$

Das Vehacc_Diff_Offset wird nur berechnet, wenn die Signaldifferenz einen Mindestwert von 0.2g überschreitet.

Die oberste Kennlinie in Fig. 4 gibt den Vordruckverlauf (Prees_Main) wieder. Zum Zeitpunkt $t_0$ ("BLS_Active") wird die Bremse betätigt. Die Vordruckerhöhung zum Zeitpunkt $t_1$ wird durch ein Nachtreten verursacht. Außerdem ist in Fig.4 eine von der Fahrzeugreferenzgeschwindigkeit abgeleitete Fahrzeugverzögerung ("TOTVACC") und eine durch Messung der Radverzögerung ermittelte Verzögerungsgröße ("VACC_FIL") dargestellt.

Für die Offsets bei einer Bremskraftregelung (EBV) an der Hinterachse gilt folgendes:

Bei einem Bremsvorgang kommt es bei höheren Verzögerungen auf Hochreibwert oder in bestimmten Fahrsituationen (Bergabfahrten, Kurven), i.d.R. zuerst an der Hinterachse zu schlupfbedingten Bremskraftbegrenzungen. Eine Verzögerungszunahme ist dann nur noch durch Erhöhung des Bremsdruckes an der Vorderachse möglich. Dies ist nur durch einen über dem normalen Niveau liegenden höheren Vordruck realisierbar.

Zusätzlich stützt die Hinterachse bei frontgetrieben Fahrzeugen auch maßgeblich die Bildung des Signals $VACC_{fil}$, das dann als Folge eines Regelungseintritts für eine Beurteilung der Verzögerungstendenz relativ unbrauchbar wird. Um auch in dieser Situation eine Fehlauslösung zu vermeiden, berücksichtigen verschiedene Offsets den jeweiligen Regelungszustand der Hinterachse.

$$\text{Bei EBV- Regelung gilt:}\qquad RA\_EBD\_Offset = 15\,bar$$

$$\text{bei ABS- Regelung:}\qquad RA\_ABS\_Offset = 20\,bar$$

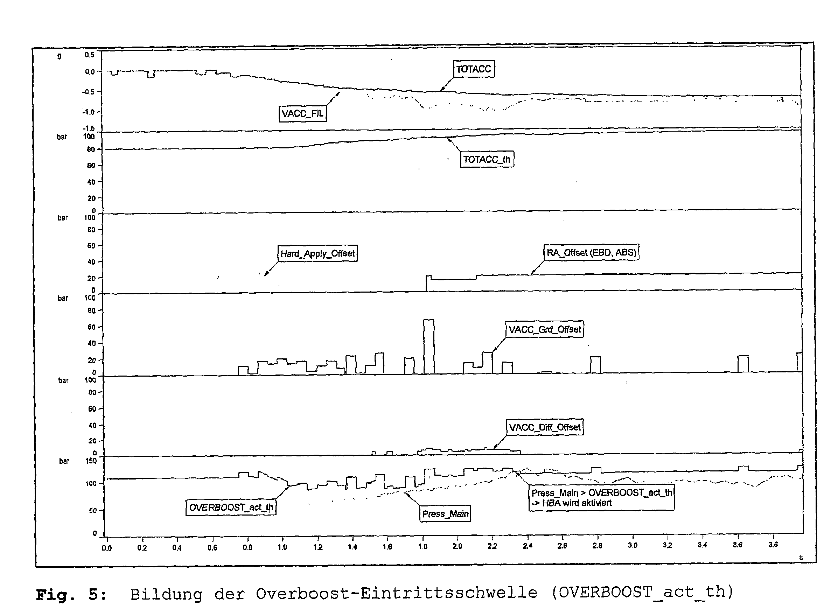

Overboost-Eintrittsschwelle (Fig. 5):

Schließlich werden zur Bildung der in das Geschehen eingreifenden Overboost-Eintrittsschwelle (OVERBOOST_act_th) letztlich sämtliche Offsets zu der Basisschwelle (TOTACC_th) addiert; dies veranschaulicht Fig. 5. Es gilt:

$$OVERBOOST\_act\_th = \begin{cases} TOTACC\_th + \\ Hard\_Apply\_Offset + \\ VACC\_grd\_Offset + \\ VACC\_Diff\_Offset + \\ RA\_EBD\_Offset + \\ RA\_ABS\_Offset \end{cases}.$$

Die in der vorgenannten Beziehung aufgezählten Offset-Komponenten geben, wie zuvor beschrieben, die folgenden Funktionen bzw. Abhängigkeiten wieder: die Basisschwelle (TOTACC_th), den Offset bei Bremsassistenzfunktion (Hard_Apply_Offset), einen aus der gefilterten Fahrzeugverzögerung abgeleiteten Wert (VACC_grd_Offset), einen Fahrzeugverzögerungs-Differenzwert (VACC_Diff_offset), eine von der Bremskraftverteilung an der Hinterachse abhängigen Wert (RA_EDB_Offset) und ein von der ABS-Funktion abhängigen Wert (RA_ABS_Offset).

In Fig. 5 sind in dem obersten Diagramm die Fahrzeugverzögerung TOTACC und die radgestützte, d.h. mit. Hilfe aus den Raddrehzahlen abgeleitete Fahrzeugverzögerung VACC_FIL wiedergegeben. Aus beiden Größen wird die Basisschwelle TOTACC_th abgeleitet. Der Verlauf der einzelnen, bereits zuvor erläuterten Offsets und des Differenzwertes VACC_Diff_offset ist ebenfalls in Fig. 5 dargestellt. Schließlich sind in dem unteren Diagramm der Vordruck Press_Main, die Overboost-Eintrittsschwelle OVERBOOST_act_th und der Einsatz-Zeitpunkt $t_E$ wiedergegeben.

Die Eintrittsschwelle ist im beschriebenen Ausführungsbeispiel der Erfindung auf einen Maximalwert von 125 bar begrenzt. Sollte bei einem Vordruck von Press_Main > 125 bar noch keine ABS-Regelung an der Vorderachse aktiv sein, wird "Overboost" ausgelöst. Weitere Einzelheiten der Bildung der Overboost-Eintrittsschwelle sind Fig. 5 zu entnehmen.

Erfindungsgemäß ist es also gelungen, ausgehend vom Ziel, eine Overboost-Funktion so selten wie möglich, aber so oft wie nötig zuzulassen, eine komplexe Konstellationen von Fahreraktivitäten und Fahrzeugreaktionen innerhalb eines Bremsvorgangs durch einen relativ einfachen Algorithmus zu bewerten. Auf Overboost-relevante Situationen wird mit dem Verfahren nach der Erfindung plausibel und angemessen reagiert. Die Bildung der Eintrittsschwelle aus der Kombination der Basisschwelle mit den vorgenannten, die Fahrzeugreaktion berücksichtigenden Offset-Größen stellt folglich ein wichtiges Merkmal des erfindungsgemäßen Verfahrens dar.

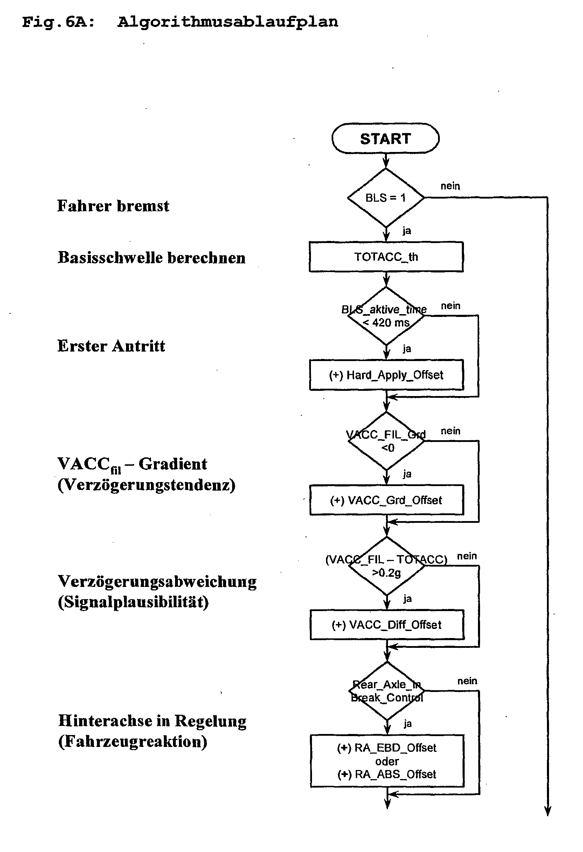

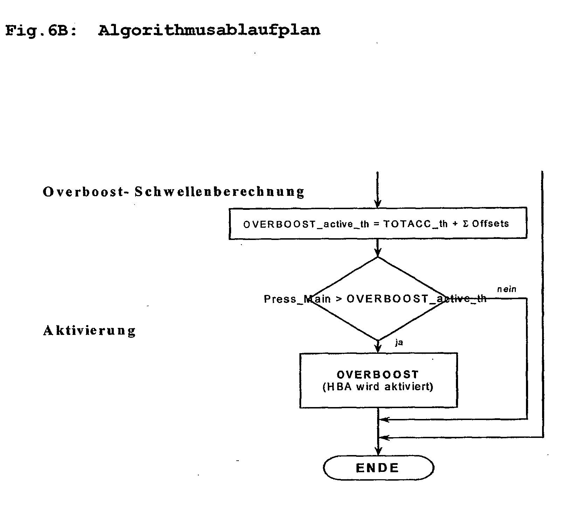

Ein Beispiel eines Ablaufplans (Flow-Chart) der einzelnen Schritte und damit ein Beispiel des erfindungsgemäßen Verfahrens ist in den Figuren 6 (A+B) wiedergegeben.

Der Ablauf beginnt mit einer Bremsenbetätigung, die durch einen Bremslichtschalter-Signalwechsel erkannt wird. Die einzelnen Berechnungs- und Entscheidungsschritte sind dargestellt und beschrieben. Ziel ist eine Overboost-Schwellenberechnung und schließlich eine Aktivierung einer Overboost-Funktion, beispielsweise mit Hilfe eines bekannten hydraulischen Bremsassistenten (HBA), der ohnehin über eine Hilfskraft- oder Hilfsdruckquelle verfügt, die zur Unterstützung des Bremsenvorgangs eingesetzt werden kann. Die erfindungsgemäße Overboost-Funktion kann folglich durch eine kostenkünstige Erweiterung eines vorhandenen Bremsensystems realisiert werden.

**Patentansprüche**

1. Verfahren zur aktiven Bremsdruck- oder Bremskraftunterstützung eines Bremsensystems bei verminderter Wirksamkeit der Fahrzeugbremsanlage, bei dem eine Unterstützung durch eine Druckerhöhung herbeigeführt wird, wobei die Druckerhöhung durch Einleiten einer aktiven Unterstützung, nachfolgend OVERBOOST-Funktion genannt, erfolgt, wobei eine Erhöhung des Bremsdruckes oder der Bremskraft durch Zuschaltung einer Energie- oder Druckquelle bewirkt wird und für die Unterstützung der hydraulische Druck im Bremsensystem durch ein Motorpumpenaggregat eines Kraftfahrzeug-Regelungssystems erhöht wird, und wobei die Auslösung auf Situationen beschränkt wird, in denen vorgegebene Kriterien erfüllt sind, wobei die vorgegebenen Kriterien eine OVERBOOST-Eintrittsschwelle festlegen, bei deren Überschreitung die Unterstützung eingeleitet wird, **dadurch gekennzeichnet, dass** die OVERBOOST-Eintrittsschwelle in Abhängigkeit zumindest

   - von der Fahrzeugverzögerung oder einem Näherungswert,
   - von dem Zeitablauf seit Beginn der Bremsenbetätigung,
   - von der Radverzögerung,
   - von der Differenz zwischen der Radverzögerung und der Fahrzeugverzögerung,
   - von dem Eingreifen einer EBV-Regelung, d.h. einer elektronischen Regelung der Bremskraftverteilung und

- von dem Eingreifen einer Blockierschutzregelung, d.h. einer ABS-Regelung variiert wird.

**2.** Verfahren nach Anspruch 1, **dadurch gekennzeichnet, dass** das die OVERBOOST-Eintrittsschwelle (*OVERBOOST_act_th*) und das Überschreiten dieser Schwelle nach der Beziehung

$$OVERBOOST\_act\_th = \begin{cases} TOTACC\_th + \\ Hard\_Apply\_Offset + \\ VACC\_grd\_Offset + \\ VACC\_Diff\_Offset + \\ RA\_EBD\_Offset + \\ RA\_ABS\_Offset \end{cases}$$

ermittelt werden, wobei "*TOTACC_th*" eine Basisschwelle und die Offset-Komponente "*Hard_Apply_Offset*" die Zeitspanne seit der Bremsenbetätigung wiedergeben, wobei die Offset-Komponenten "*VACC_grd_Offset*" die Radverzögerung und "*VACC_Diff_offset*" die Differenz zwischen der Rad- und der Fahrzeugverzögerung bedeuten und wobei die Offset-Komponenten "*RA_EDB_offset*" sowie "*RA_ABS_Offset*" den Eingriff der EBV-Regelung und der ABS-Regelung in die Bestimmung der OVERBOOST-Eintrittsschwelle einbeziehen.

**Claims**

**1.** Method for active brake pressure or brake force boosting of a brake system in the event of reduced effectiveness of the vehicle brake installation, in which method boosting is effected by means of a pressure increase, wherein the pressure increase is realized by initiation of active boosting, referred to hereinafter as OVERBOOST function, wherein an increase in the brake pressure or the brake force is effected by activation of an energy or pressure source, and for the boosting, the hydraulic pressure in the brake system is increased by means of a motor-pump assembly of a motor vehicle control system, and wherein the triggering is restricted to situations in which predefined criteria are met, wherein the predefined criteria define an OVERBOOST initiation threshold, in the event of the exceedance of which the boosting is initiated,
**characterized in that** the OVERBOOST initiation threshold is varied as a function of at least

- the vehicle deceleration or an approximated value,
- the time that has elapsed since the start of the brake actuation,
- the wheel deceleration,
- the difference between the wheel deceleration and the vehicle deceleration,
- the intervention of an EBD controller, that is to say an electronic controller for the brake force distribution, and
- the intervention of an anti-lock controller, that is to say an ABS controller.

**2.** Method according to Claim 1, **characterized in that** the OVERBOOST initiation threshold (*OVERBOOST_act_th*) and the exceedance of said threshold are determined in accordance with the relationship

$$OVERBOOST\_act\_th = \begin{cases} TOTACC\_th + \\ Hard\_Apply\_Offset + \\ VACC\_grd\_Offset + \\ VACC\_Diff\_Offset + \\ RA\_EBD\_Offset + \\ RA\_ABS\_Offset \end{cases}$$

where "*TOTACC_th*" represents a base threshold and the offset component "*Hard_Apply_Offset*" represents the time period since the brake actuation, wherein the offset component "*VACC_grd_Offset*" refers to the wheel deceleration and the offset component "*VACC_Diff_offset*" refers to the difference between the wheel deceleration and the vehicle deceleration, and wherein the offset components "*RA_EDB_Offset*" and "*RA_ABS_Offset*" incorporate the intervention of the EBD controller and the ABS controller into the determination of the OVERBOOST initiation threshold.

**Revendications**

1. Procédé pour l'assistance active de la pression de freinage ou de la force de freinage d'un système de freinage en cas d'efficacité réduite de l'installation de freinage du véhicule, dans lequel une assistance est réalisée par une augmentation de pression, l'augmentation de pression se produisant par l'introduction d'une assistance active, ci-après appelée fonction OVERBOOST, une augmentation de la pression de freinage ou de la force de freinage étant réalisée par mise en circuit d'une source d'énergie ou de pression, et pour l'assistance, la pression hydraulique dans le système de freinage étant augmentée par une unité de pompe à moteur d'un système de régulation du véhicule automobile, et le déclenchement étant limité à des situations dans lesquelles des critères prédéfinis sont satisfaits, les critères prédéfinis établissant un seuil d'entrée OVERBOOST lors du dépassement duquel l'assistance est lancée, **caractérisé en ce que** le seuil d'entrée OVERBOOST est varié en fonction d'au moins

   - la décélération du véhicule ou une valeur approximative,
   - le temps écoulé depuis le début de l'actionnement des freins,
   - la décélération des roues,
   - la différence entre la décélération des roues et la décélération du véhicule,
   - l'enclenchement d'une régulation EBV, c'est-à-dire d'une régulation électronique de la répartition de la force du freinage et
   - l'enclenchement d'une régulation d'antiblocage, c'est-à-dire d'une régulation ABS.

2. Procédé selon la revendication 1, **caractérisé en ce que** le seuil d'entrée OVERBOOST (OVERBOOST_act_th) et le dépassement de ce seuil sont déterminés à partir de la relation

$$OVERBOOST\_act\_th = \begin{cases} TOTACC\_th + \\ Hard\_Apply\_Offset + \\ VACC\_grd\_Offset + \\ VACC\_Diff\_Offset + \\ RA\_EBD\_Offset + \\ RA\_ABS\_Offset \end{cases}$$

"TOTACC_th" signifiant un seuil de base et la composante de décalage "Hard_Apply_Offset" signifiant l'intervalle de temps à partir de l'actionnement des freins, la composante de décalage "VACC_grd_Offset" signifiant la décélération des roues et la composante de décalage "VACC_Diff_Offset" signifiant la différence entre la décélération des roues et la décélération du véhicule et les composantes de décalage "RA_EDB_Offset" et "RA_ABS_Offset" incluant la notion de régulation EBV et de régulation ABS dans la détermination du seuil d'entrée OVERBOOST.

**Fig.1**: Basisschwelle / ABS- Druck- Verzögerungskennlinie

Stützstellen zur Definition der Basisschwelle:

| TOTVACC [g] | Press_Main [bar] |
|-------------|------------------|
| 0 | 80 |
| 0.3 | 80 |
| 0.8 | 100 |
| 1.27 | 120 |

9

**Fig.2** : Zeitverlauf des Hard_Apply_Offset

Fig. 3: Bildung des Vehacc_Grd_Offset

**Fig. 4**: Bildung des Vehacc_Diff_Offset

**Fig. 5:** Bildung der Overboost-Eintrittsschwelle (OVERBOOST_act_th)

**Fig.6A: Algorithmusablaufplan**

START

**Fahrer bremst**

BLS = 1 — nein

ja

**Basisschwelle berechnen**

TOTACC_th

BLS_aktive_time < 420 ms — nein

**Erster Antritt**

ja

(+) Hard_Apply_Offset

VACC_FIL_Grd < 0 — nein

**VACC$_{fil}$ – Gradient (Verzögerungstendenz)**

ja

(+) VACC_Grd_Offset

(VACC_FIL – TOTACC) > 0.2g — nein

**Verzögerungsabweichung (Signalplausibilität)**

ja

(+) VACC_Diff_Offset

Rear_Axle_in Break_Control — nein

**Hinterachse in Regelung (Fahrzeugreaktion)**

ja

(+) RA_EBD_Offset
oder
(+) RA_ABS_Offset

**Fig.6B: Algorithmusablaufplan**

Overboost- Schwellenberechnung

$$\text{OVERBOOST\_active\_th} = \text{TOTACC\_th} + \Sigma \text{ Offsets}$$

Press_Main > OVERBOOST_active_th — *nein*

Aktivierung

*ja*

**OVERBOOST**
(HBA wird aktiviert)

ENDE

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19501760 A1